(19) Europäisches Patentamt
European Patent Office
Office européen des brevets

(11) EP 0 603 628 B1

(12) # EUROPÄISCHE PATENTSCHRIFT

(45) Veröffentlichungstag und Bekanntmachung des Hinweises auf die Patenterteilung:
**05.11.1997 Patentblatt 1997/45**

(51) Int Cl.[6]: **C08K 5/05**, C08L 83/04

(21) Anmeldenummer: **93119652.1**

(22) Anmeldetag: **06.12.1993**

(54) **Titan(IV)-chelate und ihre Verwendung in Polysiloxanmassen**

Titanium(IV) chelates and their use in polysiloxane compositions

Chélates de titanium(IV) et leur utilisation dans des compositions de polysiloxanes

(84) Benannte Vertragsstaaten:
**AT BE CH DE DK ES FR GB GR IT LI NL SE**

(30) Priorität: **17.12.1992 DE 4242622**

(43) Veröffentlichungstag der Anmeldung:
**29.06.1994 Patentblatt 1994/26**

(73) Patentinhaber: **BAYER AG**
**51368 Leverkusen (DE)**

(72) Erfinder:
- **Friebe, Robert, Dr.**
  **D-51373 Leverkusen (DE)**
- **Huggins, John, Dr.**
  **D-51373 Leverkusen (DE)**
- **Weber, Wilhelm, Dr.**
  **D-51373 Leverkusen (DE)**
- **Sockel, Karl-Heinz**
  **D-51373 Leverkusen (DE)**

(56) Entgegenhaltungen:
**EP-A- 0 310 986** **EP-A- 0 361 803**
**US-A- 4 438 039**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Titanchelate, die als Chelatbildner sowohl β-Dicarbonylverbindungen, wie z.B. Acetessigsäureethylester, als auch Citronensäureester enthalten, sowie Zubereitungen daraus und deren Verwendung in Polysiloxanmassen.

Erfindungsgemäße Polysiloxanmassen, die die neuen Titanchelate enthalten zeichnen sich durch eine geringe Eigenfarbe und keine bzw. nur geringe Verfärbung aus.

Die erfindungsgemäßen Polysiloxanmassen sind unter Ausschluß von Feuchtigkeit lagerfähig und härten unter dem Einfluß von Wasser oder Wasserdampf bzw. Feuchtigkeit bei Raumtemperatur aus.

Solche Massen können aus Polydiorganosiloxanen mit reaktiven Endgruppen, Silanvernetzern und ggf. Füllstoff unter Verwendung von Organotitanverbindungen hergestellt werden (DE-A 3 512 337, US-A 3 334 067, US-A 3 499 859, US-A 4 438 039). Solche Massen werden nachfolgend 1K-RTV-Massen genannt.

Der Einsatz organischer Titanverbindungen in 1K-RTV-Massen ist auf bestimmte Substanzklassen begrenzt. Werden Alkyltitanate eingesetzt, so treten aufgrund der zu hohen Reaktionsfähigkeit der Alkyltitanate Herstellungsprobleme auf. Außerdem werden Massen mit nicht ausreichender Lagerstabilität erhalten. Farblose Titancitronensäureesterkomplexe(EP-A 310 986) sind ebenfalls bekannt, liefern jedoch in 1K-RTV-Massen eingesetzt Produkte mit unzureichender Lagerstabilität und schlechten Vernetzungseigenschaften. Nach dem Stand der Technik werden daher für 1K-RTV-Massen als organische Titanverbindung Chelat-Komplexe des Titans mit 1,3-Diketonen wie Acetylaceton oder mit Estern der Acetessigsäure eingesetzt (z.B. Diisobutoxy-diacetessigsäureethylestertitanat). Diese Chelatkomplexe verursachen aber häufig Verfärbungsprobleme, die dem Chelatbildner zugeschrieben werden.

Es bestand daher die Aufgabe, neue Titankomplexe zu finden, die keine Verfärbung in vernetzten 1K-RTV-Massen verursachen sowie gute Eigenschaften bei der Vernetzung und Lagerung der 1K-RTV-Massen aufweisen.

Es wurde gefunden, daß die bekannten Nachteile von 1K-RTV-Massen, die organische Titanverbindungen enthalten, weitestgehend vermieden werden können, wenn als organische Titanverbindung solche Verbindungen eingesetzt werden, die durch Umsetzung von Titanaten mit β-Dicarbonylverbindungen und Citronensäureestern erhalten werden. Unerwarteterweise wurde beobachtet, daß solche Titanate, die als Liganden eine Kombination aus Alkoxy- und/oder 1,n-Dioxiorganogruppen und o.g. Chelatbildner enthalten, in 1K-RTV-Massen als Katalysator eingesetzt, schnell und gut durchhärtende, farblose und lagerstabile Polysiloxanmassen liefern.

Gegenstand der vorliegenden Erfindung sind demgemäß neue Titan(IV)chelate sowie bei Umgebungstemperatur unter Einfluß von Wasser bzw. Feuchtigkeit härtende Polysiloxanmassen, die erhältlich sind durch Vermischen von

a) Polyorganosiloxanen mit reaktiven Endgruppen,

b) Polyorganosiloxanen mit nicht reaktiven Endgruppen,

c) Silanvernetzern,

d) Umsetzungsprodukten von Titanaten mit 1,3-Diketonen und Citronensäureestern,

e) Füllstoffen und

f) weiteren Zusatz- und Hilfsstoffen wie z.B. Haftmittel, Stabilisatoren u.a.

Als Polydiorganosiloxane mit reaktiven Endgruppen können Polydimethylsiloxane eingesetzt werden, wobei ggf. die Methylgruppen teilweise durch Vinyl-, Phenyl-, $C_2$- bis $C_8$-Alkyl- oder Halogenalkylgruppen ersetzt sein können.

Die Polydimethylsiloxane sollen im wesentlichen linear sein, geringe Anteile an verzweigend wirkenden Organosiloxyeinheiten können jedoch anwesend sein. Die Viskosität der Polymere liegt vorzugsweise zwischen 5 und 1.000 Pa·s, vorzugsweie unterhalb von 100 Pa·s. Als reaktive Endgruppen kommen OH-Gruppen oder Trialkoxysilyl- oder Dialkoxyalkylsilyl-Gruppen in Frage. Bevorzugt sind im letzteren Fall Diethoxymethylsilyl-, Diethoxyvinylsilyl- oder Dimethoxymethylsilyl-Gruppen.

Als Silanvernetzer sind Alkoxysilane, Oximosilane oder Carbonamidosilane geeignet. Bevorzugte Alkoxysilane sind Tetraethoxysilan, Methyltrimethoxysilan, Methyltriethoxysilan oder Vinyltriethoxysilan.

Bevorzugte Oximosilane sind solche, die 3 oder 4 über Sauerstoff gebundene Oximgruppen enthalten, oder deren Gemische. Besonders bevorzugt sind Oximosilane der nachfolgenden Struktur:

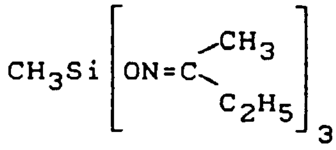 , 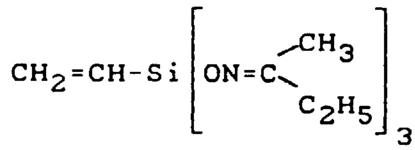

oder

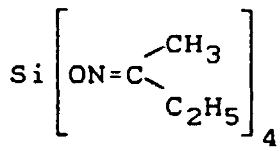 .

Bevorzugte Carboamidosilane sind solche der nachfolgenden Struktur:

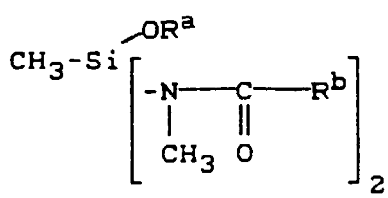

oder

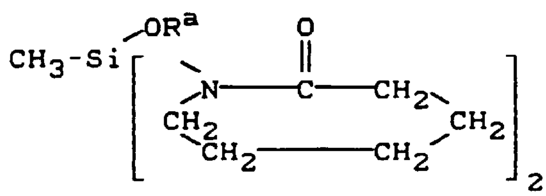

wobei

$R^a$ Methyl oder Ethyl und

$R^b$ Methyl, Ethyl oder Phenyl bezeichnen.

Für die Umsetzung mit β-Dicarbonylverbindungen und Citronensäureestern geeignete Titanate sind Verbindungen der Formel

$Ti(OR)_4$; 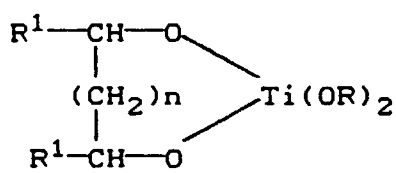

wobei

R gleiche oder verschiedene lineare oder verzweigte $C_1$- bis $C_{20}$-Alkylreste oder Alkoxyalkylreste bezeichnet, die ggf. an einem oder mehreren Kohlenstoffatomen an beliebiger Position eine oder mehrere OH-Gruppen tragen, bezeichnet,

$R^1$ entspricht einem Rest R oder Wasserstoff oder ist eine C(O)OR-Gruppe, und

n = 0, 1.

Die Alkylreste können gleich oder unterschiedlich sein. Bevorzugte Alkylreste sind Ethyl-, i-Propyl-, n-Butyl-, i-Butyl- und 2-Ethylhexylreste.

Beispiele sind

$$Ti(OC_2H_5)_4,$$

$$Ti[OCH(CH_3)_2]_4,$$

$$Ti[O(n\text{-}C_4H_9)]_4,$$

$$Ti[OCH_2CH(CH_3)_2]_4,$$

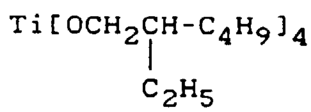

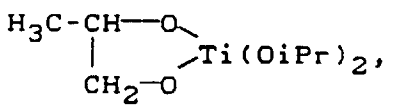

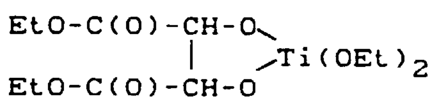

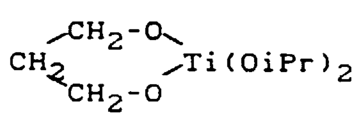

Die cyclischen Titanate können ggf. zuvor aus der entsprechenden Dihydroxyverbindung und einem Alkyltitanat hergestellt und in einem Folgeschritt mit der entsprechenden β-Dicarbonylverbindungen und Citronensäureester umgesetzt werden.

Entsprechende Dihydroxyverbindungen können z.B. 1,2- oder 1,3-Propandiol, 2,3-Butandiol, 1,4-Octandiol oder Weinsäurediethylester sein.

Geeignete Titanate können ferner durch Umsetzung von Polyalkoholen wie Glyzerin mit Alkyltitanaten hergestellt werden, wobei es nicht notwendig ist, daß alle Hydroxylgruppen zu covalenten Ti-O-Bindungen umgesetzt werden.

Die eingesetzten β-Dicarbonylverbindungen sind bevorzugt 2,4-Pentandion und Acetessigsäureester wie z.B. Acetessigsäureethylester, Acetessigsäureisobutylester.

Bevorzugte Citronensäureester sind Citronensäuretriisobutylester, Citronensäurediethylester, Citronensäuretriethylester. Es können aber auch gemischte Trialkylester eingesetzt werden wie z.B. Citronensäurediisobutylethylester.

Ester der Acetessigsäure und Citronensäure mit längerkettigen Alkylgruppen können entweder direkt zur Umsetzung mit den Titanaten gebracht, oder vorteilhafter-weise aus den leicht verfügbaren und preisgünstigen Ethylestern

durch Umesterung mit den entsprechenden Alkoholen während oder nach der Synthese der Titanchelate erzeugt werden.

Die Umsetzung der Titanate mit den β-Dicarbonylverbindungen und Citronensäureestern erfolgt spontan nach Vermischen der Reaktionspartner bzw. ggf. nach Erwärmung des Reaktionsgemisches. Der freigesetzte Alkohol kann nach Beendigung der Reaktion destillativ bei Normaldruck oder im Vakuum entfernt bzw. teilweise oder vollständig in der Mischung verbleiben.

Für die Umsetzung werden vorzugsweise pro Mol Titanat 0,1 bis 2,1 Mol β-Dicarbonylverbindungen und 0,1 bis 2,1 Mol Citronensäureester eingesetzt, wobei die Summe der Mole von β-Dicarbonylverbindungen und Citronensäureester zwischen 1 und 3, besonders bevorzugt zwischen 1,5 und 2 Mol liegen soll. Besonders bevorzugt werden 0,1 bis 1,9, insbesondere 0,1 bis 1,5 Mol, Citronensäureester je Mol Titanat eingesetzt.

Es wird angenommen, daß die Umsetzungsprodukte bzw. Mischungen davon folgende Struktur aufweisen:

$$(RO)_x TiL^1_y L^2_z ,$$

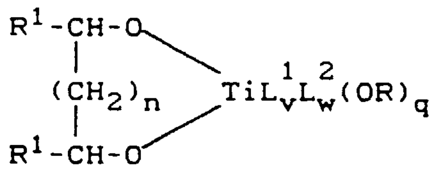

oder
Oligomerstrukturen wie

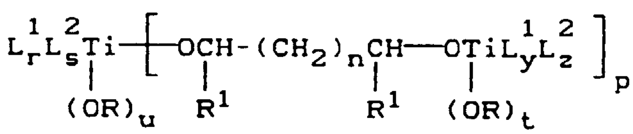

wobei

$$x+y+z = 4,$$

$$v+w+q = 2,$$

$$r+s+u+p = 4$$

$$y+z+t = 3,$$

$$n = 0 \text{ oder } 1,$$

y, z, v, w im Mittel einen Wert von 0,1 bis 2,1, vorzugsweise 0,1 bis 1,9, besonders bevorzugt 0,5 bis 1,5, hat,

r, s einen Wert von 0 bis 2,1 hat,

x im Mittel einen Wert von 1,0 bis 3,0 hat,

q im Mittel einen Wert von 0 bis 0,9 hat,

u, t im Mittel einen Wert von 0 bis 2,0 hat.

p im Mittel einen Wert von 1 bis 4 hat,

$L^1$ einen Liganden der Struktur

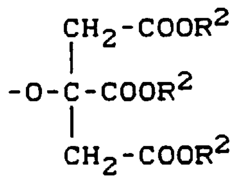

$L^2$ einen Liganden der Struktur

$$-O-C(R^3)=CH-C(O)R^3$$

R und $R^1$ die gleiche Bedeutung haben, wie oben bei der Beschreibung der Titanate definiert und jeweils gleich oder verschieden sein können,

$R^2$ gleiche oder verschiedene lineare oder verzeigte $C_1$- bis $C_{20}$-Alkylrest oder Alkoxyalkylrest bezeichnet, die ggf. an einem oder mehreren Kohlenstoffatomen an beliebiger Position eine oder mehrere OH-Gruppen tragen, oder Wasserstoff bezeichnet, und

$R^3$ gleiche oder verschiedene lineare oder verzweigte $C_1$-$C_{20}$-Alkylreste oder -Alkoxyalkylreste bezeichnet.

Die als Umsetzungsprodukte erhaltenen Titanverbindungen werden in Mengen von 0,05 bis 10 Gew.-%, vorzugsweise 0,2 bis 6 Gew.-%, bezogen auf die Menge des Polyorganosiloxans (Komponente a) eingesetzt.

Die erfindungsgemäßen Titanchelate können ggf. durch Teilhydrolyse in Oligomere überführt werden, die als Strukturelement Ti-O-Ti Brücken aufweisen.

Weiterhin wird mindestens ein Füllstoff eingesetzt, der der Paste Standfestigkeit und dem Vulkanisat Festigkeit verleiht. Geeignete Füllstoffe sind pyrogene Kieselsäure und/oder feinteilige Kreide, sowie gegebenenfalls weitere übliche Füllstoffe. Weiterhin einzusetzende Hilfsund Zusatzstoffe sind Haftvermittler, wie Aminoalkylsilane, Epoxysilane oder Mercaptosilane, Katalysatoren, z.B. Dialkylzinndicarboxylat oder Zinkoctoat, Stabilisatoren und gegebenenfalls weitere reaktionsfähige Silane wie beispielsweise Hexamethyldisilazan.

Die Herstellung der erfindungsgemäßen 1K-RTV-Massen erfolgt in üblicher Weise durch Vermischen der Bestandteile unter Ausschluß von Feuchtigkeit.

## Beispiele

### Beispiel 1

Zu 150,0 g (0,53 Mol) Tetraisopropyltitanat, das in einem Rundkolben mit Rührer, Tropftrichter, Thermometer und Destillationsapparatur (Destillationsaufsatz, Kühler und Vorlage) vorgelegt wurde, gab man langsam unter Rühren innerhalb einer halben Stunde 145,8 g (0,53 Mol) Citronensäuretriethylester. Anschließend wurden 69,0 g (0,53 Mol) Acetessigsäureethylester zugegeben.

Nach Beendigung der Zugabe wurde bei RT 1 Stunde nach-gerührt und anschließend der während der Reaktion frei-gesetzte Alkohol abdestilliert. Es wurden 304,8 g einer klaren, hellgelben Flüssigkeit erhalten.

| Elementaranalyse ($C_{24}H_{42}O_{12}Ti$): | | | |
|---|---|---|---|
| gefunden | 50,6 % C, | 7,4 % H, | 8,4 % Ti |
| berechnet | 50,5 % C, | 7,4 % H, | 8,4 % Ti |

$^1$H-NMR (300 MHz, $CDCl_3$, ppm) δ 1,25 (mult $CH_3$, Int = 135), 1,95 (s, C-CH=C, Int = 15,0), 2,7-3,05 (mult $CH_2$,

Int = 20,0), 4,0-4,5 (mult $OCH_2$, Int = 33,0), 4,6-3,3 (mult $OCH_2$, Int = 20,0).

Beispiel 2

Es wurde entsprechend Beispiel 1 verfahren und 209,0 g (0,61 Mol) Tetraisobutyltitanat mit 169,8 g (0,61 Mol) Citronensäuretriethylester und 80,0 g (0,61 Mol) Acetessigsäureethylester umgesetzt. Als Produkt wurde eine hellgelbe Flüssigkeit (399,9 g) isoliert.

Beispiel 3

61,0 g des entsprechend Beispiel 2 gewonnen Titanates wurden 4 Stunden in 55,0 g Isobutanol am Rückfluß gekocht und anschließend vom Alkohol destillativ befreit. Es wurden 63,5 g einer hellgelben viskosen Flüssigkeit isoliert.

Beispiel 4

Analog Beispiel 1 wurden 114,1 g (0,5 Mol) Tetraethyltitanat mit 103,1 g (0,5 Mol) Weinsäurediethylester, 65,0 g (0,5 Mol) Acetessigsäureethylester und 138,1 (0,5 Mol) Citronensäuretriethylester umgesetzt. Nachdem der Alkohol abdestilliert wurde, verblieb eine gelbe klare Flüssigkeit in einer Ausbeute von 335,8 g.

| Elementaranalyse: ($C_{26}H_{40}O_{16}Ti$). | | | |
|---|---|---|---|
| gefunden | 47,8 % C, | 6,3 % H, | 6,9 % Ti |
| berechnet | 47,6 % C, | 6,1 % H, | 7,3 % Ti |

Beispiel 5

Es wurden 142,1 g (0,5 Mol) Tetraisobutyltitanat mit 38,0 g (0,5 Mol) 1,2-Propandiol, 117,0 g (0,9 Mol) Acetessigsäureethylester und 27,6 g (0,1 Mol) Citronensäuretriethylester umgesetzt. Man isoliert 223,8 g einer gelben klaren Flüssigkeit.

Beispiel 6 (Vergleich, ohne Citronensäureester)

90,6 g (0,27 Mol) Tetraisobutyltitanat wurden mit 69,4 g (0,53 Mol) Acetessigsäureethylester umgesetzt. Nach Entfernung des Alkohols wurden 121,2 g einer dunkelroten klaren Flüssigkeit isoliert, die NMR-spektroskopisch als Diisobutoxy-diacetessigsäureethylestertitanat charakterisiert werden konnte.

Beispiel 7 (Vergleich, ohne Acetessigsäureethylester)

Es wurde analog Beispiel 1 60 g (0,21 Mol) Tetraisopropyltitanat mit 116,6 g (0,42 Mol) Citronensäuretriethylester umgesetzt. Das Gemisch wurde im Vakuum vom Alkohol befreit und 154,6 g einer klaren, hellgelben Flüssigkeit erhalten.

| Elementaranalyse ($C_{30}H_{52}O_{16}Ti$): | | | |
|---|---|---|---|
| gefunden | 49,4 % C, | 7,3 % H, | 6,7 % Ti |
| berechnet | 50,3 % C, | 6,7 % H, | 6,7 % Ti |

$^1$H-NMR (300 MHz, $CDCl_3$, ppm): $\delta$ 1,25 (mult $CH_3$, Int = 150), 2,7-3,05 (mult $CH_2$, Int = 37), 4,05-4,40 (mult $OCHC_2$, Int = 47), 4,6-5,3 (mult, $OCHC_2$, Int = 13,4).

Beispiel 8 (Vergleich, ohne Citronensäureester)

111,3 g (0,49 Mol) Tetraethyltitanat wurden entsprechend Beispiel 1 mit 100,6 g (0,49 Mol) Weinsäurediethylester und anschließend mit 125,9 g (0,98 Mol) Acetessigsäureethylester umgesetzt. Nach Entfernung des Alkohols unter vermindertem Druck verblieben 254,8 g einer roten klaren Flüssigkeit.

Beispiel 9

In einem Planetenmischer wurden 55,0 Gew.-Teile eines Polydimethylsiloxans mit $-OSi(OCH_3)_2(CH_3)$-Endgruppen, das eine Viskosität von 50 Pas besaß, mit 29,0 Gew.-Teilen eines Polydimethylsiloxans mit $-OSi(CH_3)_3$-Endgruppen (Viskosität 0,1 Pas) und 2,5 Gew.-Teilen Methyltrimethoxysilan vermischt. Danach wurden 9,5 Gew.-Teile einer hydrophoben pyrogenen Kieselsäure eingemischt. Zum Abschluß wurden die Titanchelate gemäß Beispiel 1 bis 8 in den entsprechend Tabelle 1 aufgeführten Gew.-Teilen zugesetzt.

Zur Beurteilung des Vernetzungsverhaltens und der Haftung wurde auf einer Glasplatte ein 4 mm dickes Prüffell auf einer Fläche von 40 mal 60 mm aufgetragen. Nach 48 Stunden war das Material bis zur Glasoberfläche durchgehärtet und konnte nicht mehr ohne kohäsiven Riß vom Untergrund abgezogen werden.

Zur Überprüfung der mechanischen Daten wurden 2 mm dicke Felle ausgezogen und nach 6 tägiger Aushärtung bei 23°C und 50 % relativer Luftfeuchtigkeit nach DIN 53 504 geprüft.

Die Lagerstabilität wurde so beurteilt, daß die Paste in einer verschlossenen Tube bei 50°C gelagert wurde. Im Wochenabstand wurden Proben entnommen und auf Vernetzung geprüft. Nach Überschreitung der in Tabelle 1 angegebenen Lagerzeit vernetzen die Massen nach 1 Woche nicht mehr.

Tabelle 1: Prüfergebnisse der entsprechend Beispiel 10 hergestellten Dichtstoffe

| Titanat | | Dichtstoff | | | Normprüfungen | | | |
|---|---|---|---|---|---|---|---|---|
| Bsp. | Teile | Vernetzung | Farbe | Lagerstabilität | Härte Shore A | Bruch deh. [%] | E-Modul [N/mm²] | Reißfestigkeit [N/mm²] |
| 1. | 1 | 2 | 1 | 28 | 20 | 573 | 0,42 | 1,95 |
| 2. | 1 | 2 | 1 | 21 | 19 | 562 | 0,39 | 1,84 |
| 3. | 1 | 2 | 1 | 42 | 19 | 601 | 0,46 | 2,17 |
| 4. | 1 | 3 | 1 | - | 22 | 372 | 0,51 | 1,57 |
| 5. | 1 | 3 | 1 | 42 | 20 | 574 | 0,45 | 2,10 |
| 6. | 1 | 0 | 2 | 56 | 20 | 627 | 0,39 | 1,87 |
| 7. | 2 | 3 | 1 | 14 | - | - | - | - |
| 8. | 1 | 0 | 2 | - | 20 | 425 | 0,45 | 1,87 |

Erläuterungen:

Vernetzung: Beurteilung der Durchhärtung eines 4 mm dicken Fells auf einer Glasplatte nach 2 Tagen; 0 = gut vernetzt, trockene Oberläche, 1 = Oberfläche etwas klebrig, 2 = Oberfläche klebrig, 3 = Oberfläche stark klebrig

Farbe: Beurteilung des ausgehärteten Dichtstoffes; 1 = farblos, 2 = gelb

Lagerstabilität: bei 50°C in Tagen

Beispiel 10

In einem Planetenmischer wurden 46,6 Gew. -Teile eines Polydimethylsiloxans mit $-OSi(CH_3)_2OH$-Endgruppen, das eine Viskosität von 50 Pas besaß, mit 19,6 Gew.-Teilen eines Polydimethylsiloxans mit $-OSi(CH_3)_3$-Endgruppen (Viskosität 0,1 Pas) und mit 20 Gew.-Teilen eines mit Stearinsäure behandelten Kreide vermischt. Danach wurden 3,5 Gew. -Teile eines Titankomplexes, hergestellt gemäß Beispiel 3, eingemischt. Durch Zugabe von 4,5 Gew.-Teilen einer hydrophilen pyrogenen Kieselsäure, 0,7 Gew.-Teilen Dibutylzinndilaurat und 3,0 Gew.-Teilen eines Silans der Formel $CH_3Si(OC_2H_5)[N(CH_3)COC_6H_5]_2$ wurde der Ansatz vervollständigt.

Nach 24 Stunden war die als Prüffell ausgezogene Paste gut durchgehärtet und wies keine Verfärbung auf. Die unvulkanisierte Paste war länger als 42 Tage (Prüfbedingungen Beispiel 9) lagerstabil.

Beispiel 11

In einem Planetenmischer wurden 32,5 Gew.-Teile eines Polydimethylsiloxans mit $-OSi(CH_3)_2$ OH-Endgruppen, das eine Viskosität von 80 Pas besaß, mit 22,0 Gew.-Teilen eines Polydimethylsiloxans mit $-OSi(CH_3)_3$-Endgruppen (Viskosität 0,01 Pas) und mit 32,5 Gew.-Teilen eines mit Stearinsäure behandelten Kreide vermischt. Danach wurden 2,0 Gew.-Teile des Titankomplexes gemäß Beispiel 2 eingemischt. Durch Einmischen von 2,5 Gew.-Teilen Methyltrimethoxysilan und 5,5 Gew.-Teilen einer hydrophilen pyrogenen Kieselsäure wurde der Ansatz vervollständigt.

Der Test auf Vernetzung und Glashaftung zeigte nach 48 Stunden Vernetzung gute Haftung und keine Farbveränderung.

## Patentansprüche

1. Bei Umgebungstemperatur unter Einfluß von Wasser bzw. Feuchtigkeit härtende Polyorganosiloxanmassen enthaltend Umsetzungsprodukte von Titanaten mit β-Dicarbonylverbindungen und Citronensäureestern, bzw. deren Teilhydrolyseprodukten.

2. Verwendung von bei Umgebungstemperatur unter Einfluß von Wasser bzw. Feuchtigkeit härtende Polyorganosiloxanmassen enthaltend Umsetzungsprodukte von Titanaten mit β-Dicarbonylverbindungen und Citronensäureestern bzw. deren Teilhydrolyseprodukten zur Herstellung von 1K-RTV-Massen.

3. Polyorganosiloxanmassen gemäß Anspruch 1, wobei die Umsetzungsprodukte von Titanaten mit β-Dicarbonylverbindungen und Citronensäureestern in Mengen von 0,1 bis 10 Gew.-%, vorzugsweise von 0,2 bis 6 Gew.-%, bezogen auf das Gesamtgewicht des eingesetzten, reaktive Endgruppen enthaltenden Polyorganosiloxans, vorhanden sind.

4. Titan(IV)chelate erhältlich durch Umsetzung von Titanaten mit 0,1 bis 2,1 Mol β-Dicarbonylverbindungen und 0,1 bis 2,1 Mol Citronensäureestern pro Mol Titanat, wobei zusammen 1 bis 3 Mol β-Dicarbonylverbindungen und Citronensäureester, je Mol Titanat eingesetzt werden.

5. Komplexverbindungen bzw. Mischungen von Komplexverbindungen nach Anspruch 4 der Struktur

$$(RO)_x TiL^1_y L^2_z ,$$

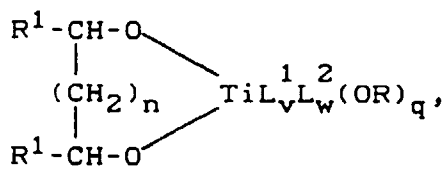

oder

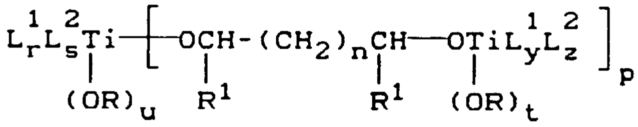

wobei

$$x+y+z = 4,$$

$$v+w+q = 2,$$

$$r+s+u+p = 4,$$

$$y+z+t = 3,$$

$$n = 0 \text{ oder } 1,$$

y, z, v, w im Mittel einen Wert von 0,1 bis 2,1 hat,

r, s im Mittel einen Wert von 0 bis 2,1 hat,

x im Mittel einen Wert von 1,0 bis 3,0 hat,

q im Mittel einen Wert von 0 bis 0,9 hat,

u, t im Mittel einen Wert von 0 bis 2,0 hat.

p im Mittel einen Wert von 1 bis 4 hat,

$L^1$ einen Liganden der Struktur

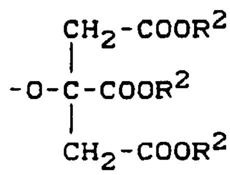

$L^2$ einen Liganden der Struktur

$$-O-C(R^3)=CH-C(O)R^3$$

| | |
|---|---|
| R, $R^1$, $R^2$ und $R^3$ | jeweils die gleiche oder verschiedene Reste bezeichnen, gemäß Definition: |
| R | ggf. OH-substituierte lineare oder verzweigte $C_1$- bis $C_{20}$-Alkylreste oder Alkoxyalkylreste bezeichnet, |

$R^1$ entsprechend Definition R oder eine C(O)OR-Gruppe oder H,

$R^2$ = H oder entsprechend Definition R, vorzugsweise jedoch entsprechend Definition R,

$R^3$ lineare oder verzweigte $C_1$-$C_{20}$-Alkylreste, -Alkoxyalkylreste oder Alkoxyreste.

**6.** Titanchelate gemäß Anspruch 4 oder 5, wobei die Summe der Anzahl der Liganden $L^1$ und $L^2$ je Ti-Atom 1 bis 3 beträgt.

**7.** Zubereitungen enthaltend Titanchelate gemäß Anspruch 4, 5 oder 6 bzw. deren Teilhydrolyseprodukte und Alkohol.

**8.** Verfahren zur Herstellung von Titanchelaten und Zubereitungen daraus gemäß einem der Ansprüche 4 bis 7, dadurch gekennzeichnet, daß Alkyltitanate mit β-Dicarbonylverbindungen und Citronensäureestern im gewünschten stöchiometrischen Verhältnis, ggf. unter Zugabe von Polyalkoholen, in einem Eintopfverfahren in einem oder mehreren Reaktionsschritten bei 20°C bis 120°C umgesetzt werden und ggf. in Anwesenheit eines bzw. mehrerer verschiedener Alkohole an den Estergruppierungen der Substituenten Umesterungsreaktionen durchgeführt werden.

**9.** Verfahren nach Anspruch 8, dadurch gekennzeichnet, daß die Titanchelate durch Teilhydrolyse in Oligomere überführt werden.

## Claims

**1.** Polyorganosiloxane compositions, containing reaction products of titanates with β-dicarbonyl compounds and citrates or their partial hydrolysis products, which harden at ambient temperature under the influence of water or moisture.

**2.** Use of the polyorganosiloxane compositions, containing reaction products of titanates with β-dicarbonyl compounds and citrates or their partial hydrolysis products, which harden at ambient temperature under the influence of water or moisture to prepare 1K-RTV compositions.

**3.** Polyorganosiloxane compositions according to Claim 1, wherein the reaction products of titanates with β-dicarbonyl compounds and citrates are present in amounts of 0.1 to 10 wt.%, preferably 0.2 to 6 wt.%, with reference to the total weight of the polyorganosiloxane containing reactive terminal groups which is used.

**4.** Titanium(IV) chelates obtainable by reacting titanates with 0.1 to 2.1 moles of β-dicarbonyl compounds and 0.1 to 2.1 moles of citrates per mole of titanate, wherein 1 to 3 moles of β-dicarbonyl compounds and citrates, together, are used per mole of titanate.

**5.** Complex compounds or mixtures of complex compounds according to Claim 4 with the structure

$$(RO)_x TiL^1_y L^2_z$$

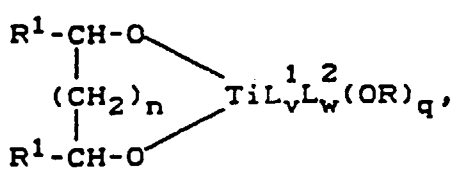

or

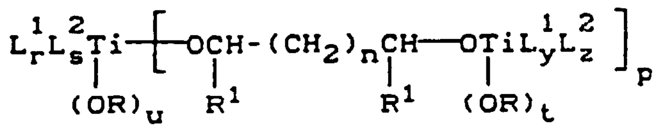

wherein

$$x+y+z = 4,$$

$$v+w+q = 2,$$

$$r+s+u+p = 4,$$

$$y+z+t = 3,$$

$$n = 0 \text{ or } 1,$$

y, z, v, w has a value, on average, of 0.1 to 2.1,

r, s has a value, on average, of 0 to 2.1,

x has a value, on average, of 1.0 to 3.0,

q has a value, on average, of 0 to 0.9,

u, t has a value, on average, of 0 to 2.0

p has a value, on average, of 1 to 4,

$L^1$ is a ligand with the structure

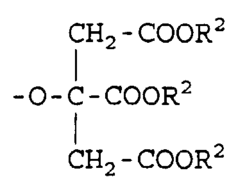

$L^2$ is a ligand with the structure

$$-O-C(R^3)=CH-C(O)R^3$$

| | |
|---|---|
| R, $R^1$, $R^2$ and $R^3$ | each represent identical or different groups defined as follows: |
| R | represents an optionally OH-substituted linear or branched $C_1$ to $C_{20}$-alkyl group or alkoxyalkyl group, |
| $R^1$ | is defined in the same way as R or represents a C(O)OR group or H, |

$R^2$ = H or is defined in the same way as R, preferably, however, is defined in the same way as R,

$R^3$ represents a linear or branched $C_1$-$C_{20}$-alkyl group, alkoxyalkyl group or alkoxy group.

**6.** Titanium chelates according to Claim 4 or 5, wherein the sum of the number of ligands $L^1$ and $L^2$ is 1 to 3 per Ti atom.

**7.** Preparations containing titanium chelates according to Claim 4, 5 or 6 or their partial hydrolysis products and alcohol.

**8.** A process for preparing titanium chelates and preparations thereof in accordance with one of Claims 4 to 7, characterised in that alkyl titanates are reacted with β-dicarbonyl compounds and citrates in the desired stoichiometric ratio, optionally with the addition of polyalcohols, in a one-pot process in one or more process steps at 20°C to 120°C and optionally transesterification reactions are performed with the ester groupings on the substituents in the presence of one or more different alcohols.

**9.** A process according to Claim 8, characterised in that the titanium chelates are converted into oligomers by partial hydrolysis.

**Revendications**

**1.** Masses de polyorganosiloxanes durcissant à température ambiante sous l'influence de l'eau ou de l'humidité, qui contiennent des produits de réaction de titanates avec des dérivés β-dicarbonylés et des esters citriques ou leurs produits d'hydrolyse partielle.

**2.** Utilisation de masses de polyorganosiloxanes durcissant à température ambiante, sous l'influence de l'eau ou de l'humidité, contenant des produits de réaction de titanates avec des dérivés β-dicarbonylés et des esters citriques ou leurs produits d'hydrolyse partielle, pour la préparation de masses RTV-1C.

**3.** Masses de polyorganosiloxanes selon la revendication 1, contenant des produits de réaction de titanates avec des dérivés β-dicarbonylés et des esters citriques en quantité de 0,1 à 10 %, de préférence de 0,2 à 6 % du poids total du polyorganosiloxane à groupes terminaux réactifs mis en oeuvre.

**4.** Chélates de titane-IV obtenus par réaction de titanates avec 0,1 à 2,1 mol de dérivés β-dicarbonylés et 0,1 à 2,1 mol d'esters citriques par mole du titanate, avec au total 1 à 3 mol de dérivés β-dicarbonylés et d'esters citriques par mole de titanates.

**5.** Complexes ou mélanges de complexes selon la revendication 4, de structure

$$(RO)_x TiL^1_y L^2_z$$

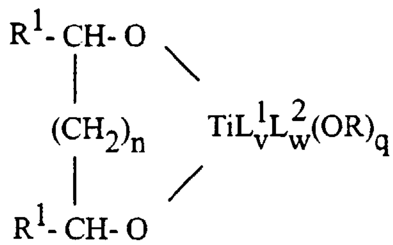

ou bien une structure d'oligomère telle que

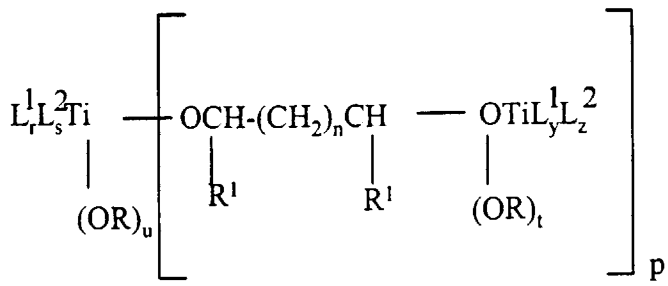

dans laquelle

$$x+y+z = 4,$$

$$v+w+q = 2,$$

$$r+s+u+p = 4,$$

$$y+z+t = 3,$$

$$n = 0 \text{ ou } 1$$

y, z, v, w ont en moyenne une valeur de 0,1 à 2,1,
r et s ont en moyenne une valeur de 0 à 2,1,
x a en moyenne une valeur de 1,0 à 3,0,
q a en moyenne une valeur de 0 à 0,9,
u et t ont en moyenne une valeur de 0 à 2,0,
p a en moyenne une valeur de 1 à 4,
$L^1$ est un ligand de structure

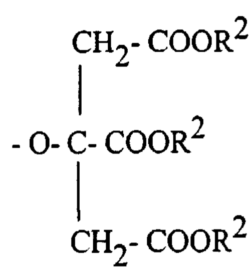

$L^2$ est un ligand de structure

$$-O-C(R^3)=CH-C(O)R^3$$

les symboles R, $R^1$, $R^2$ et $R^3$, ayant des significations identiques ou différentes pour chacun d'entre eux, ont les significations suivantes :
R groupe alkyle à chaîne droite ou ramifiée en $C_1$-$C_{20}$ portant éventuellement des substituants OH ou groupe alcoxyalkyle,
$R^1$ comme R ou groupe C(O)OR, ou H,
$R^2$ = H ou comme R, de préférence cependant comme R,

R3 groupe alkyle, alcoxyalkyle à chaîne droite ou ramifiée en $C_1$-$C_{20}$ ou groupe alcoxy.

6. Chélates de titane selon les revendications 4 ou 5, dans lesquels la somme des nombres des ligands $L^1$ et $L^2$ est de 1 à 3 pour chaque atome de titane.

7. Compositions contenant des chélates de titane selon les revendications 4, 5 ou 6 ou leurs produits d'hydrolyse partielle et un alcool.

8. Procédé de préparation de chélates de titane et de compositions en contenant selon une des revendications 4 à 7, caractérisé en ce que l'on fait réagir des titanates d'alkyle avec des dérivés β-dicarbonylés et des esters citriques aux proportions stoechiométriques voulues, le cas échéant avec adjonction de polyalcools, dans une opération en un seul récipient ou en un ou plusieurs stades de réaction à des températures de 20 à 120°C et le cas échéant on procède à des réactions de transestérification sur les groupements esters des substituants en présence d'un ou plusieurs alcools différents.

9. Procédé selon la revendication 8, caractérisé en ce que l'on convertit les chélates de titane en oligomères par hydrolyse partielle.